# EUROPÄISCHE PATENTANMELDUNG

(11) **EP 1 736 238 A1**
(43) Veröffentlichungstag der Anmeldung: **27.12.2006**
(21) Anmeldenummer: 06115879.6
(22) Anmeldetag: 22.06.2006
(51) Int. Cl.: B01J 23/26, B01J 23/06, B01J 23/72, B01J 37/03, B01J 23/86, C07C 29/149

(54) **Verfahren zur Erhöhung der mechanischen Beständigkeit von übergangsmetallhaltigen Katalysatoren**

(30) Priorität: 23.06.2005 DE 102005029109
(71) Anmelder: SÜD-CHEMIE AG, 80333 München (DE)
(72) Erfinder: Hieke, Martin, 83052, Bruckmühl (DE); Hinze, Dieter, 83059, Kolbermoor (DE); Kiesel, Stephan, 83126, Flintsbach / Inn (DE); Polier, Siegfried, 83052, Bruckmühl (DE)
(74) Vertreter: Morf, Jan Stefan

(57) **Zusammenfassung**

Ein Verfahren zur Herstellung eines partikelförmigen, mindestens ein Metall der ersten oder zweiten Nebengruppe enthaltenden Katalysators umfasst das Trocknen und Kalzinieren von M_{y}(NH₃)ₓCrO₄, wobei M ein Metall der ersten oder zweiten Nebengruppe darstellt, y entsprechend 2 oder 1 ist und x einen Zahlenwert zwischen 0,5 und 4 annehmen kann, wobei die bei der Kalzinierung freiwerdende exotherme Reaktionsenthalpie in einem Maße abgeführt wird, dass der Anteil an Partikeln, bestimmt nach einem 60 minütigem Ultraschall-Kreislauftest mit einem Laser-Partikel-Sizer, mit einem Durchmesser von unterhalb 2 µm weniger als 9 Volumenprozent (errechnet aus dem durchschnittlichen, gemessenen Partikeldurchmesser), bezogen auf das Gesamtvolumen aller Katalysatorpartikel, ist. Ein Katalysator ist nach diesem Verfahren herstellbar und sowohl in kombinierten Veresterungs-/Hydrierungsreaktionen als auch in üblichen Hydrier- und Dehydrierungsreaktionen verwendbar.

## Beschreibung

Die Erfindung betrifft ein Verfahren zur Erhöhung der mechanischen Beständigkeit von übergangsmetallhaltigen Katalysatoren, insbesondere Kupfer und Chrom enthaltenden Katalysatoren.

Zur Hydrierung werden nach dem Stand der Technik vielfach partikelförmige Katalysatoren auf Kupfer- und Chromoxidbasis eingesetzt.

Aus der WO 92/20447 A1 ist beispielsweise ein Katalysator aus Kupfer- oder Zinkoxid in Kombination mit einem zweiten Metalloxid, wie Chrom-, Molybdän-, Wolfram- oder Vanadiumoxid, optional zusammen mit einem Oxid eines Promotorenmetalls, wie Mangan, Barium, Zink, Nickel, Kobalt, Cadmium oder Eisen, bekannt. Die beschriebenen Katalysatoren zeichnen sich durch besondere Eigenschaften, wie eine enge Partikelgrößenverteilung und eine relativ enge Porenvolumenverteilung, aus. Sie werden, beispielsweise in einem kontinuierlichen Verfahren, durch das Zusammenführen einer ersten Lösung von Kupfer- oder Zinksalz mit einer zweiten Lösung enthaltend eine Base hergestellt, wobei entweder die erste oder die zweite Lösung zusätzlich ein lösliches Salz des zweiten Metalls enthält. Die durch das Zusammenführen der beiden Lösungen erhaltenen Fällungsprodukte werden isoliert und kalziniert. Die besonderen Eigenschaften des so erhaltenen Katalysators werden der kontinuierlichen Prozessführung zugeschrieben.

Wie bei allen anderen Katalysatoren nach dem Stand der Technik auch, besteht ebenso bei den aus der WO 92/20447 A1 bekannten Katalysatoren ein erheblicher Nachteil darin, dass sie keine ausreichende mechanische Stabilität aufweisen. Insbesondere in beispielsweise bei der Fettsäureesterhydrierung verwendeten Slurry-Kreislaufreaktoren, in denen prozessbedingt erhebliche Druck- und Temperaturschwankungen auftreten, zerfallen die Katalysatorenkörner in Feinteilchen, die im Kreislaufprozess ihre katalytische Aktivität nicht mehr in ausreichendem Maße für die gewünschte Reaktion bereitstellen können. Ferner wird schon bei der Herstellung, die einen Kalzinierungsschritt umfasst, ein erheblicher Anteil an Feinteilchen in das Endprodukt eingebracht, der zu einer verfahrensbedingten geringeren katalytischen Aktivität des Endprodukts führt. Ferner kann in Wirbelbett-oder Slurry-Kreislaufprozessen, die beispielsweise mit Temperaturunterschieden von bis zu 280°C und Druckdifferenzen von bis zu 300 bar betrieben werden, bei Verwendung kupferhaltiger Katalysatoren die Bildung von Feinteilchen zu einer Verkupferung der Wärmetauscher und Düsen führen und damit zu einer verminderten Anlagenfunktion sowie zum Agglomerieren einzelner Partikel zu größeren Verbänden, die in den für die Katalysatorabtrennung vorgesehenen Zentrifugen zu Unwuchtungen führen, so dass diese aufwändig und gegebenenfalls per Hand zu entleeren sind.

Es besteht daher ein erheblicher Bedarf an mechanisch stabilen Pulver-Katalysatoren auf Basis von Übergangsmetallen, insbesondere zur Verwendung in Slurry-Hydrierungsreaktionen.

Diese Aufgabe wird im Rahmen der vorliegenden Erfindung gelöst durch ein Verfahren zur Herstellung eines partikelförmigen, mindestens ein Metall der ersten oder zweiten Nebengruppe enthaltenden Katalysators durch Kalzinieren von M_{y}(NH₃)ₓCrO₄, wobei M ein Metall der ersten oder zweiten Nebengruppe darstellt, y entsprechend 2 oder 1 ist und x einen Zahlenwert zwischen 0,5 und 4 annehmen kann, wobei die bei der Kalzinierung freiwerdende exotherme Reaktionsenthalpie in einem Maße abgeführt wird, dass der Anteil an Feinteilchen von unterhalb 2 µm, bestimmt nach einem 60 minütigem Ultraschall-Kreislauftest mit einem Laser-Partikel-Sizer, minimiert wird bzw. weniger als 9 Volumenprozent (errechnet aus dem durchschnittlichen, gemessenen Partikeldurchmesser), bezogen auf das Gesamtvolumen aller Katalysatorpartikel, beträgt.

Im Rahmen der vorliegenden Erfindung wurde erkannt, dass während der Kalzinierung von M_{y}(NH₃)ₓCrO₄ die freiwerdende Reaktionsenthalpie abgeführt werden muss, da sich ansonsten eine Schädigung der Textur der Katalysatorteilchen ergibt. Diese Texturschädigung führt letztlich dazu, dass die Stabilität des Katalysators verringert wird und dieser im Laufe der industriellen Prozesse zu Feinteilchen zerfällt, die dann die oben beschriebenen negativen Effekte in die industriellen Prozesse einbringen.

Ein Maß für die Stabilität der nach dem Prozess der vorliegenden Erfindung hergestellten Katalysatorteilchen ist die Beständigkeit der Teilchen in einem Ultraschalltest in einer Kreislaufapparatur. Hierbei wird die Langzeitstabilität der Katalysatorpulverproben durch intensive Ultraschallbehandlung in wässriger Suspension und anschließender Messung der Korngrößenverteilung bestimmt. Gemäß der Erfindung ist es wesentlich, dass der Anteil an Feinteilchen mit einem Durchmesser von unterhalb 2 µm, bestimmt nach einem 60 minütigem Ultraschall-Kreislauftest mit einem Laser-Partikel-Sizer, weniger als 9 Volumenprozent, bezogen auf das Gesamtvolumen aller Katalysatorpartikel, ist. Bevorzugt liegt der Anteil dieser Feinteilchen sogar unter 2 Volumenprozent, beispielsweise zwischen 0,5 und 2 Volumenprozent.

Als Laser-Partikel-Sizer wird der Fritsch Laser-Partikel-Sizer "Analysette 22 ECONOMY" verwendet und das Verfahren gemäß Beispiel 9 angewandt.

Bevorzugt umfasst das erfindungsgemäße Verfahren die folgenden Schritte:
(a) Bereiten einer ersten Ausgangslösung durch Vermischen einer Promotorenlösung mit einer Nitratlösung eines Metalls der ersten oder zweiten Nebengruppe,
(b) Bereiten einer zweiten Ausgangslösung, enthaltend Ammoniumchromat,
(c) Einleiten einer Fällungsreaktion durch Vermischen der ersten und zweiten Ausgangslösung in einer Cofällung im Batch-Betrieb, in der durch geeignete Dosierung der beiden Ausgangslösungen der pH-Wert der Mischung nach Vorgabe geführt bzw. konstant gehalten wird,
(d) Isolierung des Fällungsproduktes aus Schritt (c) durch Filtration und
(e) Trocknen und (e') Kalzinieren des Isolierungsproduktes aus Schritt (d).

Als Promotoren zur Bereitung der ersten Ausgangslösung in Schritt (a) sind beispielsweise Barium, Mangan, Zink, Nickel, Kobalt, Cadmium, Eisen und Mischungen davon geeignet. Bevorzugt liegen die Promotoren als Salze, beispielsweise Carbonate, vor, werden in Wasser suspendiert und unter Zugabe einer Säure, beispielsweise HNO₃, gelöst. Besonders bevorzugt sind Mischungen von Barium- und Mangancarbonat. Die Menge an Promotormetall kann beispielsweise von 0,1 bis 15 Gewichtsprozent, bevorzugt 1 bis 10 Gewichtsprozent und besonders bevorzugt 3 bis 15 Gewichtsprozent bezogen auf die Gesamtmenge an Metall im Katalysator betragen.

Als Metalle der ersten oder zweiten Nebengruppe zur Bereitung der ersten Ausgangslösung sind Kupfer und Zink bevorzugt, besonders bevorzugt ist Kupfer. Diese werden als wässrige Nitratlösung mit der Promotorenlösung vermischt. Das Vermischen der beiden Lösungen kann auf jede bekannte Art und Weise erfolgen, beispielsweise indem die eine Lösung vorgelegt und die andere unter Rühren zugegeben wird. Gegebenenfalls kann das Vermischen unter erhöhter Temperatur der einzelnen Lösungen, beispielsweise bei bis zu 50°C erfolgen. Es kann aber entsprechend der nachfolgenden Prozessschritte auch sinnvoll sein, die erhaltene Mischung zu erhitzen, beispielsweise auf bis zu 50°C.

Die zweite Ausgangslösung in Schritt (b) enthält Ammoniumchromat. Zur Herstellung einer wässrigen Ammoniumchromatlösung wird beispielsweise von CrO₃ ausgegangen, welches unter Rühren in Wasser gelöst wird. Diese CrO₃-Lösung wird dann mit einer Ammoniaklösung vereinigt, beispielsweise indem die Ammoniaklösung vorgelegt und die CrO₃-Lösung, bevorzugt unter Rühren, zugegeben wird. Gegebenenfalls kann das Vermischen unter erhöhter Temperatur der einzelnen Lösungen, beispielsweise bei bis zu 50°C erfolgen. Es kann aber entsprechend der nachfolgenden Prozessschritte auch sinnvoll sein, die erhaltene Mischung zu erhitzen, beispielsweise auf bis zu 50°C.

Die Fällungsreaktion wird in Schritt (c) durch Vermischen der ersten und zweiten Ausgangslösung, beispielsweise in einer Cofällung im Batch-Betrieb, eingeleitet. Bevorzugt liegt der dosiertechnisch konstant gehaltene pH-Wert der Mischung bei 6,2 +/- 0,1. Die Fällungsreaktion wird bevorzugt bei erhöhter Temperatur, beispielsweise bei bis zu 55°C, durchgeführt. Besonders bevorzugt ist es, wenn der pH-Wert im angegebenen Bereich liegt und gleichzeitig bei erhöhter Temperatur im angegebenen Bereich gearbeitet wird. Die Fällung kann durch direktes Vermischen der beiden Ausgangslösungen erfolgen. Es kann aber auch in einem Fällbehälter Wasser bei erhöhter Temperatur vorgelegt und die beiden Ausgangslösungen gleichzeitig in den Fällbehälter unter Rühren dosiert werden. Die Rührerdrehzahl kann hierbei in einem Bereich von 200 bis 400 Upm, bevorzugt 200 bis 300 Upm liegen. Es ist bevorzugt, wenn die Fällung in einem Zeitrahmen von 15 bis 60 Minuten, bevorzugt 15 bis 45 Minuten, besonders bevorzugt innerhalb von 30 Minuten durchgeführt wird. Optional kann sich an die Fällung ein Alterungsschritt anschließen, bevorzugt bei derselben Temperatur, bei der die Fällung durchgeführt wurde. Es ist bevorzugt, wenn die Alterung in einem Zeitrahmen von 15 bis 60 Minuten, bevorzugt 15 bis 45 Minuten, besonders bevorzugt innerhalb von 30 Minuten durchgeführt wird.

Der Vermischungsschritt (c) findet bevorzugt im hochturbulenten Bereich eines Rührwerks statt, bevorzugt mit einer Rotationsgeschwindigkeit des Rührers von mehr als 250 Upm. Das Verhältnis der Durchmesser der Rührorgane zum Behälter-Innendurchmesser liegt beispielsweise im Bereich von 0,2 bis 0,9, bevorzugt im Bereich von 0,4 bis 0,6. Eine Kombination der bevorzugten Umdrehungsgeschwindigkeit mit dem bevorzugten Durchmesserverhältnis ist ebenfalls bevorzugt.

Überraschenderweise hat sich gezeigt, dass unter Einhaltung dieser Bedingungen bereits eine Stabilitätsverbesserung des fertigen Katalysators erreicht wird.

Beispielsweise wird ein 200 L-Rührwerk mit einem Innendurchmesser von 495 mm verwendet, auf dessen Rührerwelle von unten nach oben drei zweiflügelige Rührorgane angebracht sind:
A) 5 cm über dem Behälterboden ein verdrillter Hydrofoil für vorwiegend vertikale Durchmischung mit einem Durchmesser von 200 mm,
B, C) 20 und 35 cm über dem Behälterboden jeweils ein 45° verdrehter, gerader Propeller mit einem Durchmesser von 300 mm.

Das so erhaltene Fällungsprodukt wird in Schritt (d) isoliert, beispielsweise durch Filtrieren, Sedimentieren oder Zentrifugieren, bevorzugt durch Filtrieren. Beispielsweise eignet sich die Filtration über eine Filterpresse, um das Fällungsprodukt zu isolieren.

Optional kann das Filtrat nach dem Isolierungsschritt (d) einem Nachfällungsschritt (d') unterzogen werden. Hierfür kann beispielsweise durch Zugabe weiterer HNO₃ der pH-Wert erniedrigt werden, beispielsweise auf 6,0 - 5,9, wodurch die Nachfällung einsetzt. Nach Abfiltrieren des Nachfällungsprodukts, beispielsweise über eine Nutsche, können sich weitere gleich ausgestaltete Nachfällungsschritte anschließen. Schließlich werden die erhaltenen Nachfällungsschritte mit dem Fällungsprodukt aus Schritt (d) vereinigt und homogenisiert.

Dem Isolierungsschritt (d) folgt technisch bedingt ein Trocknungsschritt (e), in dem, insbesondere durch Sprühtrocknung, das in Schritt (c) und dem optionalen Nachfällungsschritt (d') erhaltene Fällungsprodukt auf einen niedrigeren Feuchtegehalt eingestellt wird. Zum Zwecke der Sprühtrocknung kann der Trockensubstanzgehalt (TSG) der Suspension vorab auf 15% bis 40% (85% bis 60% Trocknungsverlust, TV) eingestellt werden (bestimmt durch Trocknung bei 120°C bis Gewichtskonstanz eintritt, beispielsweise über drei Stunden in einem Trocknungsschrank). Nach der Sprühtrocknung besitzt das erhaltene Pulver beispielsweise einen TV von 0,2 bis 20% (bestimmt durch Trocknung bei 120°C bis zur Gewichtskonstanz, Bedingungen siehe oben), bevorzugt von 0,4% bis 2,5%.

Der Filterkuchen kann auch direkt einem Kalzinierungsprozess zugeführt werden, wobei die Trocknung (e) des Filterkuchens während des Aufheizens zu Beginn des Kalzinierungsprozesses (e') erfolgt.

Es ist auch denkbar, dass weitere Trocknungsschritte in das Verfahren implementiert werden, beispielsweise vor dem Schritt (e).

Schließlich wird das Isolierungsprodukt aus Schritt (d) und gegebenenfalls (d'), das im Trocknungsschritt (e) getrocknet wurde, im Schritt (e') kalziniert. Der Kalzinierungsschritt ist der für die vorliegende Erfindung wesentliche Schritt. Durch die gezielte Abführung der exothermen Reaktionsenthalpie während der Kalzinierung wird ein stabiles Produkt erhalten, das keine oder nur eine unwesentliche Beschädigung seiner Textur erfahren hat.

Um ein Abführen der exothermen Reaktionsenthalpie zu erreichen, wird der Kalzinierungsschritt (e') beispielsweise in einer rotierenden Trommel durchgeführt. Die Trommel kann beispielsweise ein Volumen von 337 mL, einen Außendurchmesser von 54 mm und eine äußere Länge von 147 mm aufweisen.

Es ist bevorzugt, wenn die Trommel mit einer Umdrehungsgeschwindigkeit von 300 bis 500 Upm, bevorzugt 400 bis 450 Upm rotiert. Darüber hinaus findet die Kalzinierung vorteilhaft unter Inertgas, beispielsweise N₂, beispielsweise mit einer Durchflussrate von 0,3 bis 1,0 L /min, bevorzugt 0,4 bis 0,8 L/min, besonders bevorzugt 0,5 bis 0,7 L/min statt. Die Aufheizrate beträgt für jeden der folgenden nacheinander durchzuführenden Schritte beispielsweise zwischen 2 und 5K pro Minute, bevorzugt zwischen 3 und 4K pro Minute, besonders bevorzugt 3,5K pro Minute:
- Aufheizen auf 300°C, gefolgt von 20 minütigem Verweilen bei 300°C,
- Aufheizen auf eine Maximaltemperatur zwischen 380°C und 470°C, gefolgt von 10 minütigem Verweilen bei der angewandten Maximaltemperatur,
- Abkühlen auf 23°C.

Das Abkühlen wird unter beizubehaltender Rotationsgeschwindigkeit und unter Inertgas von der erreichten Maximaltemperatur bis ungefähr 200°C mit 1,5K/min bis 30K/min, vorzugsweise 1,8K/min bis 5,0K/min, und ab einer Temperatur von 200°C bis zur verpackungstechnisch zulässigen Temperatur, die in der Regel zwischen 80° und 100°C liegt, mit maximaler gerätevorgegebener Umgebungsluftkühlung durchgeführt.

Durch diese speziellen Bedingungen wird überraschenderweise sichergestellt, dass die Katalysatoren eine gegenüber den bekannten Verfahren erhöhte Stabilität aufweisen. Die Menge der über die Trommelwand pro Zeiteinheit abgeführten Wärmemenge reicht offensichtlich dazu aus, dass die Katalysatoren eine gegenüber den bekannten Verfahren erhöhte Stabilität aufweisen.

Der Kalzinierungsschritt (e') kann aber auch in einem Fließbett stattfinden. Hierbei findet als Heizgas ein Inertgas, vorzugsweise Stickstoff, Verwendung. Die maximale Temperatur kann beispielsweise zwischen 350°C und 560°C, bevorzugt zwischen 380°C und 470°C liegen. Der Gasfluss kann beispielsweise von 1,5 bis 6,0 m/sec, bevorzugt von 3,0 bis 4,0 m/sec betragen. Ein geeignetes Labor-Fließbett hat ein Volumen von 458 mL bei einem Durchmesser von 54 mm und einer Länge von 200 mm. In geeigneten kommerziellen Fließbetten werden für den Kalzinierungsschritt (e') in der Regel Gasgeschwindigkeiten zwischen 0,01 m/sec und 0,1 m/sec angewandt. Die vorgelagerte Trocknung (e) verlangt um den Faktor 10 bis 15 höhere Gasgeschwindigkeiten.

Durch die Verwendung eines Fließbetts mit den oben beschriebenen speziellen Bedingungen wurde überraschenderweise sichergestellt, dass die Katalysatoren eine gegenüber den bekannten Verfahren erhöhte Stabilität aufweisen. Als Ursache kann auch hier die gegenüber älteren Verfahren verbesserte Temperaturkontrolle im Produkt angenommen werden.

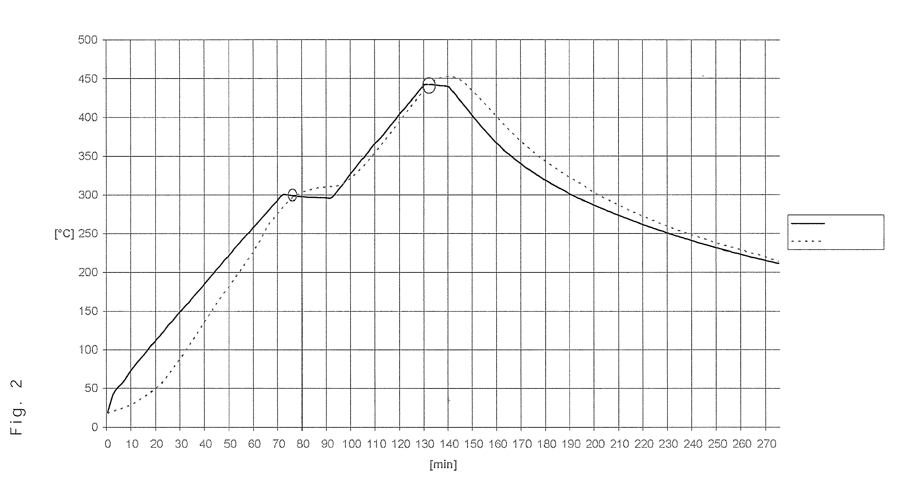

Der Kalzinierungsschritt (e') kann auch in Trommeln, die mit zusätzlichen Wärmetauschern ausgestattet sind, durchgeführt werden. Dies begrenzt beispielsweise das so genannte Überschwingen der Produkt- über die Ofentemperatur (siehe Fig. 2). Ferner sind auch Fließbetten mit zusätzlichen Wärmetauschern einsetzbar sowie so genannte Flash Calciner (Stromtrockner).

Allgemein ist es bevorzugt, wenn Reaktionswärme bei den im Rahmen der vorliegenden Anmeldung vorgeschlagenen Aufheizraten in der Größenordnung von 0,5 bis 30 mW/mg abgeführt wird.

Die Erfindung betrifft auch einen Katalysator, der nach dem Verfahren dieser Erfindung erhalten wird, sowie die Verwendung eines solchen Katalysators als Hydrierungskatalysator oder Dehydrierungskatalysator sowie als kombinierten Veresterungs-/Hydrierungskatalysator. Insbesondere eignen sich Kupfer und Chrom enthaltende Katalysatoren zur Veresterung und Hydrierung von Fettsäureestern und zur Dehydrierung von Alkoholen. Typische Hydrierungen erfolgen hierbei an C₄- bis C₂₂-Carbonsäuren in Überschuss an Alkoholen. Die Dehydrierung erfolgt unter schonenderen Druck- und Temperatur-Bedingungen als die Hydrierung, beispielsweise bei ungefähr 200°C, 20 bar H₂ sowie tendenziell tieferen Drucken. Es werden hierbei Alkohole zu Aldehyden dehydriert, die nach Anlagerung eines weiteren Moleküls Alkohol in Halbacetale übergeführt werden können. Diese Halbacetale können in einer weiteren Dehydrierreaktion in Ester übergeführt werden.

Allgemein ist das erfindungsgemäße Verfahren für Reaktionen insbesondere mit stark exothermen Effekten geeignet, aber auch für solche mit endothermen Effekten, bei deren Kalzinierung es auf eine exakte Temperaturkontrolle und quantitative Umsetzung ankommt, beispielsweise zur Minimierung von Folge-, Parallel oder Rückreaktionen. Aktivität, Selektivität und Stabilität von Katalysatoren werden durch die Qualität der Temperaturkontrolle in den thermischen Aufarbeitungsschritten stark beeinflusst. Hiervon betroffen ist beispielsweise die Kalzinierung von Cu-, Zn-, Al-Hydroxocarbonaten und -formiaten unter Inertgas, wie N₂ sowie unter Luftsauerstoff.

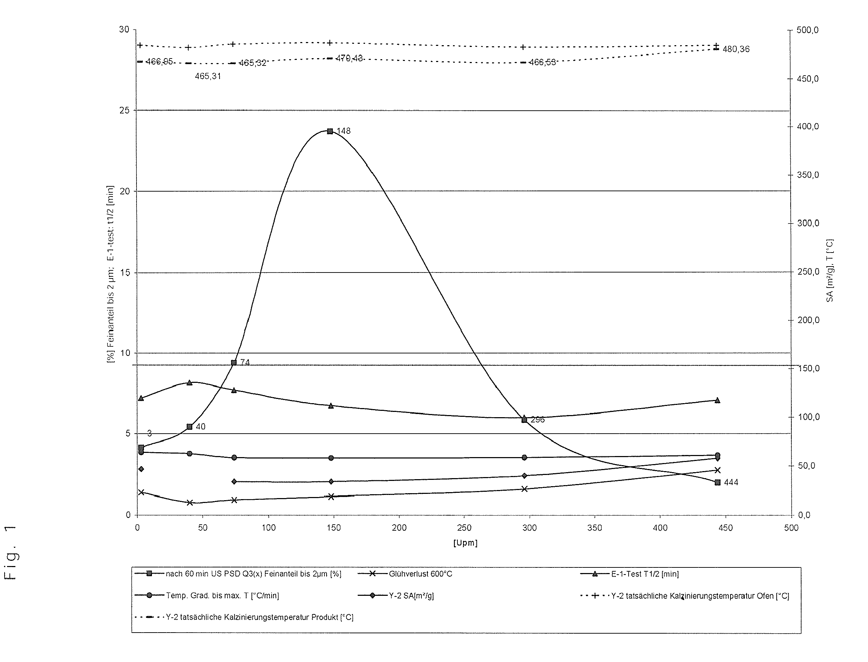

Die Erfindung wird durch die folgenden Abbildungen und die folgenden Beispiele erläutert, soll aber nicht durch diese beschränkt werden.
Es zeigen
- Fig. 1:: den Verlauf der Feinanteile bei unterschiedlichen Rotationsgeschwindigkeiten der Trommel im Kalzinierungsschritt (e') (mit Quadraten markierte Kurve) sowie die Halbwertzeit (Spezifikation: τ_{1/2}< 10 min) für einen Veresterungs-/Hydrierungsprozess als Prozess pseudo-erster Ordnung (mit Dreiecken markierte Kurve) sowie
- Fig. 2:: das Überschwingen der Produkttemperatur über die Ofentemperatur während des Kalzinierungsschritts (e') (Aufheizen auf 300°C; Verweilen über 20 min; Aufheizen auf 450°C; Verweilen über 10 min; maximale Temperatur im Drehrohr 452,7°C, im Ofen 442,5°C); die mit Kreisen markierten Schnittpunkte der Produkt- und Ofentemperaturlinien zeigen die exothermen Effekte bei der ablaufenden Reaktion.

### Beispiel 1:

### Bereitung einer Promotorenlösung

In einem 5 L-Becherglas werden 3,5 L H₂O vorgelegt und darin 675 g MnCO₃ und 47,5 g BaCO₃ suspendiert. Innerhalb von 15 min werden 850 mL 58%ige HNO₃ zudosiert und 1,5 mL H₂O₂ zugegeben. Lösezeit 30 min. Unter Rühren wird auf 70°C aufgeheizt.

### Beispiel 2:

### Bereitung einer Kupfernitratlösung:

Es wird eine wässrige Kupfernitrat-Lösung, enthaltend 2900 g Cu, hergestellt.

### Beispiel 3:

### Bereitung einer ersten Ausgangslösung (Schritt (a)):

In einem 70 L-Edelstahlbehälter (dampfbeheizt) wird die Kupfernitratlösung aus Beispiel 2 vorgelegt und die Promotorenlösung aus Beispiel 1 unter Rühren zugegeben. Mit H₂O wird auf 30 L Gesamtvolumen aufgefüllt und unter Rühren auf 55°C erwärmt.

### Beispiel 4:

### Bereitung einer Ammoniumchromatlösung (zweite Ausgangslösung) (Schritt (b)):

In einem Behälter werden 5 L H₂O vorgelegt und 4500 g CrO₃ vorsichtig unter Rühren zugegeben. In einem dampfbeheizten Behälter wird die Ammoniak-Lösung (2400 g NH₃, 12-25 Gew.-% in Wasser vorgelegt und die CrO₃-Lösung vorsichtig unter Rühren zugegeben. Mit H₂O wird auf 28 L Gesamtvolumen aufgefüllt und unter Rühren auf 55°C erwärmt.

### Beispiel 5:

### Dosiergesteuerte Cofällung bei konstantem pH-Wert im Batch-Betrieb (BCC) (Schritte (c) und (d)):

In einem dampfbeheizten 200 L-Fällbehälter werden 20 L H₂O bei 55°C vorgelegt. Die Kupfer-/Promotorenlösung aus Beispiel 3 und die Ammoniumchromatlösung aus Beispiel 4 werden gleichzeitig bei einer Rührerdrehzahl von 277 Upm (SKT-Regler 28) in den Fällbehälter dosiert sowie die Temperatur bei 55+/-5°C und der pH-Wert bei 6,2+/-0,1 gehalten, indem die Eduktströme per Dosierpumpen in geeigneter Weise eingestellt werden. Die Fällzeit beträgt 30 min. Anschließend wird bei 55°C 30 min gealtert und das Fällungsprodukt durch Filtration über eine Filterpresse erhalten.

### Beispiel 6:

### Nachfällung aus dem Filtrat (Schritt (d')):

Durch Zugabe von 58 Gew.-%iger HNO₃ zum Filtrat wird ein pH-Wert von 6,0 - 5,9 eingestellt. Nach 3h wird der pH-Wert erneut gemessen und nachgestellt. Nach 4h wird der pH-Wert erneut gemessen und das Produkt über eine Nutsche filtriert. Die Filterkuchen aus Beispiel 5 und 6 werden vereinigt und homogenisiert.

### Beispiel 7:

### Sprühtrocknung der Filterkuchen (Schritt (e')):

Die vereinigten Filterkuchen aus Beispiel 5 und 6 werden zu einer Suspension mit einem Feststoffgehalt von ca. 30% TSG (bestimmt durch Trocknung bei 120°C bis zur Gewichtskonstanz) aufgeschlämmt und sprühgetrocknet. Die Heizgaseingangstemperatur beträgt ungefähr 300°C, die Pulverausgangstemperatur 105 - 110°C.

### Beispiel 8:

### Kalzinieren (Schritt (e)):

Das aus Beispiel 7 erhaltene, sprühgetrocknete Produkt wird in einer rotierenden Trommel mit einem Volumen von 337 mL, einem Außendurchmesser von 54 mm und einer äußeren Länge von 147 mm bei 444 Upm unter N₂ kalziniert. Die Durchflussrate von N₂ beträgt 0,6 L/min. Die Aufheizrate der folgenden Schritte beträgt 3,5K pro Minute: Aufheizen auf 300°C, gefolgt von 20 minütigem Verweilen bei 300°C, Aufheizen auf 470°C, gefolgt von 10 minütigem Verweilen bei 470°C, Abkühlen auf 23°C.

### Beispiel 9:

### Messung der Partikelgröße - 60 minütiger Ultraschall-Kreislauftest mit einem Laser-Partikel-Sizer:

Um die Stabilität der aus Beispiel 8 erhaltenen Katalysatorpartikel zu prüfen, wird ein 60 minütiger Ultraschall-Kreislauftest mit einem Laser-Partikel-Sizer der Firma Fritsch "Analysette 22 ECONOMY" durchgeführt. Der im Folgenden beschriebene Test wird allgemein zur Ermittlung der Partikelgröße gemäß der vorliegenden Erfindung verwendet.

Zur Probenvorbereitung wird der Bodenablass eines offenen Glasgefäßes (1000 mL) mittels Verbindungsschlauch mit einer Schlauchpumpe (Verder Peristaltikpumpe Typ 2006) und dann weiter mit dem unteren Probeneinlass einer Ultraschalldurchflusszelle (Standarddurchflusszelle Edelstahl D100L1K-1S, Fa. Dr. Hielscher GmbH, Teltow, Deutschland) verbunden. Der seitliche obere Probenauslass dieser Durchflusszelle wird mittels Verbindungsschlauch zurück in das Glasgefäß geführt (Rücklaufleitung); hierbei wird er mit einer Stativklemme fixiert, sodass eine Probennahme möglich ist bevor der Rücklauf mit dem Inhalt des gerührten Glasgefäßes vermischt wird. In die Durchflusszelle ragt eine Blocksonotrode aus Titan, 0 34 mm, Länge ca. 125 mm, die mit einem schwingungsfreien Flansch (FLA 100) versehen ist, der fest mit einem Ultraschallindustrieprozessors (BS20d34, Dr. Hielscher GmbH, Teltow, Deutschland; Gerät UIP500, Leistung 500 W) verbunden ist. Letzterer ist wiederum mit einem passenden Steuergerät verkabelt. Die Durchflusszelle wird mit Kühlwasser gekühlt.

In die leere gereinigte Apparatur werden 600 mL deionisiertes Wasser eingefüllt. Durch Einschalten der Pumpe, eingeregelt auf 96 L/h, und eines in das Glasgefäß eintauchenden Rührers (IKA Ring-Propeller-Mischer; ca. 250/min; d = 60 mm) wird das Wasser im Kreis gefahren und die Apparatur luftleer geflutet. Nach Aufdrehen des Kühlwassers, wobei die Temperatur während der nachfolgenden Beschallung nicht ansteigen darf, werden in den Wasserkreislauf 4,8 g der gut homogenisierten Probe (wiederholtes Schütteln und Drehen des Probengefäßes um die drei Raumachsen) gegeben und 5 min im Kreislauf ohne Beschallung homogenisiert (Nullprobe, gezogen und vermessen wie unten beschrieben).

Der eigentliche Test wird nun durch Zuschalten der Ultraschallquelle gestartet (Amplitude 100%). Nach 60 Minuten wird eine Probe gezogen, wobei ungefähr 25 bis 50 mL aus der Rücklaufleitung in einen kleinen Erlenmeyerkolben geleitet werden. Diese Probe wird sofort der Korngrößenbestimmung in der Analysette zugeführt. Die durchschnittliche Korngröße wird in µm mit 2 Dezimalstellen als Angabe des relativen {q3(x)} oder aufsummierten {Q3(x)} Prozentgehalts zwischen x µm und x+1 µm mit 2 Dezimalstellen erhalten.

Der Anteil an Partikeln mit einem Durchmesser von unter 2 µm nach Abschluss des oben beschriebenen Ultraschall-Kreislauftests wurde für das Kalzinierungsprodukt aus Beispiel 8 zu < 2,0 Volumenprozent bestimmt und liegt damit im bevorzugten Bereich.

### Beispiel 10:

### Einfluss der Rotationsgeschwindigkeit auf den Feinanteil:

Um den Einfluss der Rotationsgeschwindigkeit der Trommel im Kalzinierungsschritt auf den Anteil an Feinpartikeln mit einem Durchmesser unter 2 µm aufzuzeigen, wurde Beispiel 8 wiederholt, wobei bei den folgenden Rotationsgeschwindigkeiten eine Partikelgrößenbestimmung nach der in Beispiel 9 beschriebenen Methode durchgeführt wurde: 3, 40, 74, 148, 296 und 444 Upm. Die in Fig. 1 angegebene glockenförmige Kurve zeigt den Verlauf der Partikelgröße. Man erkennt u.a., dass bei 444 Upm der niedrigste Wert erreicht wird. Im Bereich des aufsteigenden Bereichs der Kurve (unterhalb von 148 Upm) scheint eine Kontrolle der entstehenden exothermen Reaktionsenthalpie durch Vermischen des bereits reagierenden Pulvers mit frischem Pulver stattzufinden. Im Bereich des fallenden Bereichs der Kurve (oberhalb von 148 Upm) erfolgt die Kontrolle der entstehenden exothermen Reaktionsenthalpie durch eine vergrößerte Wärmeaustauschfläche pro Zeiteinheit (Minute) durch die schnellere Rotation. Da sich geringe Rotationsgeschwindigkeiten für eine performante Reaktionsführung nicht eignen, ist der Kurve zu entnehmen, dass der optimale Feinanteil im vorliegenden Fall bei 444 Upm erreicht wird.

Im Produktionsmaßstab liegt in der Regel in langsam rotierenden Drehrohren (1 bis 7 Upm) mit sehr beschränkt wirksamen eingebauten Mischorganen sowie unzureichender Abfuhr der exothermen Reaktionsenthalpie eine auf die Pulvereinlage bezogene wesentlich geringere Wärmeabfuhr vor.

### Beispiel 11 (Vergleich):

### Temperatureinfluss auf den Feinanteil:

Für die folgenden Versuche wurde die Vorstufe aus dem aufgeschlämmten Filterkuchen eines Produktionsansatzes gezogen, das sprühgetrocknete Produkt nach Beispiel 7 hergestellt und in einer Serie die Kalzinierungstemperatur variiert:

| | Tatsächliche Kalzinierungstemperaturam Produkt | N₂ | Haltezeit bei der Maximaltemperatur | Q3(x) nach 60 Minuten Ultraschall (Feinanteil bis zu to 2 µm) | Partikelgröße nach 60 Min Ultraschall für Q3(x) = 50% | Glühverlust bei 600°C |
|---|---|---|---|---|---|---|
| | [°C] | | [min] | [%] | [µm] | [%] |
| V1 | 145,3 | + | 15 | 2,85 | 16,87 | 27,61 |
| V2 | 221,2 | + | 15 | 5,59 | 16, 65 | 22,01 |
| V3 | 256,1 | - | 15 | 4, 95 | 17,01 | 23,64 |
| V4 | 291,5 | + | 15 | 9,79 | 16,05 | 11,65 |
| V5 | 337,3 | + | 15 | 11,23 | 15,08 | 10,9 |
| V6 | 368,4 | + | 15 | 10,27 | 15,38 | 7,45 |
| V7 | 402,0 | + | 15 | 12,87 | 14,42 | 2,43 |
| V8 | 438,2 | + | 15 | 17,61 | 14,05 | 2,85 |
| E | 300,0 / 454,6 | + | 20/10 | 9,98 | 15,30 | 2,07 |

Die Vergleichsbeispiele V1 bis V8 wurden ohne spezielles Temperaturprogramm durchgeführt. Die Temperatur im Drehrohr wurde bis zur Maximaltemperatur mit einer Rate von 1,5 K/min +/- 0,3 K erhöht. Bei Beispiel V3 wurde mit 0,5 K/min, bei V7 mit 0,9 K/min und bei E mit 3,1 K/min erhöht. Beim erfindungsgemäßen Beispiel E wurde ein wie oben bereits beschriebenes Temperaturprogramm angewandt. Bis auf ein Beispiel (V3) wurden alle Kalzinierungen in Stickstoffatmosphäre durchgeführt.

Wie an der obigen Tabelle zu sehen ist, führt überraschenderweise nur das erfindungsgemäße Temperaturprofil (Beispiel E) zu einem Produkt mit einem ausreichend geringen Feinanteil (Q3(X)) und geringem Glühverlust (ein Zeichen für erhöhte Stabilität). Beide Kriterien müssen für einen hinreichend aktiven und stabilen industriellen Veresterungs-/Hydrierkatalysator erfüllt sein.

## Patentansprüche

1. Verfahren zur Herstellung eines partikelförmigen, mindestens ein Metall der ersten oder zweiten Nebengruppe enthaltenden Katalysators durch (e) + (e') Trocknen und Kalzinieren von M_{y}(NH₃)ₓCrO₄, wobei M ein Metall der ersten oder zweiten Nebengruppe darstellt, y entsprechend 2 oder 1 ist und x einen Zahlenwert zwischen 0,5 und 4 annehmen kann, **dadurch gekennzeichnet, dass** die bei der Kalzinierung (e') freiwerdende exotherme Reaktionsenthalpie in einem Maße abgeführt wird, dass der Anteil an Partikeln, bestimmt nach einem 60 minütigem Ultraschall-Kreislauftest mit einem Laser-Partikel-Sizer, mit einem Durchmesser von unterhalb 2 µm weniger als 9 Volumenprozent (errechnet aus dem durchschnittlichen, gemessenen Partikeldurchmesser), bezogen auf das Gesamtvolumen aller Katalysatorpartikel, beträgt.

2. Verfahren nach Anspruch 1, **dadurch gekennzeichnet, dass** der Anteil an Partikeln mit einem Durchmesser von unterhalb 2 µm weniger als 2 Volumenprozent ist.

3. Verfahren nach einem der vorangehenden Ansprüche, umfassend die folgenden Schritte:
(a) Bereiten einer ersten Ausgangslösung durch Vermischen einer Promotorenlösung mit einer Nitratlösung eines Metalls der ersten oder zweiten Nebengruppe,
(b) Bereiten einer zweiten Ausgangslösung, enthaltend Ammoniumchromat,
(c) Einleiten einer Fällungsreaktion durch Vermischen der ersten und zweiten Ausgangslösung in einer Cofällung im Batch-Betrieb, in der durch geeignete Dosierung der beiden Ausgangslösungen der pH-Wert der Mischung nach Vorgabe geführt bzw. konstant gehalten wird,
(d) Isolierung des Fällungsproduktes aus Schritt (c) durch Filtration und
(e) Trocknen und (e') Kalzinieren des Isolierungsproduktes aus Schritt (d) gemäß einem Verfahren nach einem der vorangehenden Ansprüche.

4. Verfahren nach Anspruch 3, **dadurch gekennzeichnet, dass** das Isolierungsprodukt aus Schritt (d) vor Zuführung zum Kalzinierungsschritt (e') im Schritt (e) getrocknet wird.

5. Verfahren nach einem der Ansprüche 3 oder 4, **dadurch gekennzeichnet, dass** der Vermischungsschritt (c) im hochturbulenten Bereich eines Rührwerks stattfindet, bevorzugt mit einer Rotationsgeschwindigkeit des Rührers von mehr als 250 Upm.

6. Verfahren nach einem der Ansprüche 3 bis 5, **dadurch gekennzeichnet, dass** die Promotorenlösung des Schritts (a) mindestens ein Metallsalz umfasst, wobei das Metall ausgewählt ist aus der Gruppe, bestehend aus Barium, Mangan, Zink, Nickel, Kobalt, Cadmium, Eisen und Mischungen davon.

7. Verfahren nach Anspruch 6, **dadurch gekennzeichnet, dass** die Promotorenlösung Mangan- und Bariumcarbonat umfasst.

8. Verfahren nach einem der Ansprüche 3 bis 7, **dadurch gekennzeichnet, dass** die Ammoniumchromatlösung des Schritts (b) aus Ammoniak-Lösung und Chromtrioxid in Wasser hergestellt wird.

9. Verfahren nach einem der Ansprüche 3 bis 8, **dadurch gekennzeichnet, dass** das Metall der ersten oder zweiten Nebengruppe ausgewählt ist aus der Gruppe, bestehend aus Kupfer und Zink.

10. Verfahren nach einem der vorangehenden Ansprüche, **dadurch gekennzeichnet, dass** der Kalzinierungsschritt (e') in einer rotierenden Trommel durchgeführt wird.

11. Verfahren nach Anspruch 10, **dadurch gekennzeichnet, dass** die Trommel mit einer Umdrehungsgeschwindigkeit von 300 bis 500 Upm, bevorzugt 400 bis 450 Upm rotiert, die Kalzinierung unter Inertgas, bevorzugt mit 0,6 L N₂/min, durchgeführt wird, sowie mit einer Aufheizrate von jeweils 3,5K pro Minute die folgenden Schritte durchgeführt werden: Aufheizen auf 300°C, gefolgt von 20 minütigem Verweilen bei 300°C, Aufheizen auf eine Maximaltemperatur zwischen 380°C und 470°C, gefolgt von 10 minütigem Verweilen bei der angewandten Maximaltemperatur, Abkühlen auf 23°C.

12. Verfahren nach einem der Ansprüche 1 bis 9, **dadurch gekennzeichnet, dass** der Kalzinierungsschritt (e') in einem Fließbett oder Stromtrockner (Flash Calciner) stattfindet.

13. Verfahren nach Anspruch 12, **dadurch gekennzeichnet, dass** in einem Fließbett als Heizgas Stickstoffgas mit einer maximalen Temperatur zwischen 350°C und 560°C, bevorzugt zwischen 380°C und 470°C verwendet wird bei einem Gasfluss von 0,01 bis 6,0 m/sec, bevorzugt 0,04 bis 4,0 m/sec.

14. Katalysator, erhalten nach einem Verfahren nach einem der vorangehenden Ansprüche.

15. Verwendung des Katalysators nach Anspruch 14 als kombinierten Veresterungs-/Hydrierungskatalysator sowie als Hydrierungs- oder Dehydrierungskatalysator.
